# EUROPEAN PATENT APPLICATION

(11) **EP 2 239 439 A2**
(43) Date of publication of application: **13.10.2010**
(21) Application number: 10158798.8
(22) Date of filing: 31.03.2010
(51) Int. Cl.: F02C 7/232, F02C 9/26

(54) **Method and system for adjusting the position of a turbomachine valve**

(30) Priority: 07.04.2009 US 419589
(71) Applicant: General Electric Company, Schenectady, NY 12345 (US)
(72) Inventor: Tong, Ernest H., Simpsonville, SC 29681 (US); Healy, Timothy Andrew, Simpsonville, SC 29681 (US); Frederick, Garth C., Greenville, SC 29607 (US)
(74) Representative: Gray, Thomas

(57) **Abstract**

An embodiment of the present invention has the technical effect of utilizing a model-based system and real time data to adjust a parameter of at least one valve (65). An embodiment of the present invention may reduce the need of multiple sensors within a fuel system (55) by integrating a model-based controller with real-time or approximately real-time data to adjust a parameter of at least one valve (65). An embodiment of the present invention may utilize a model-based controller to calculate the fuel flow through the at least one valve, in or near real-time.

## Description

### BACKGROUND OF THE INVENTION

The present invention relates generally to a control system for a turbomachine valve; and more particularly to a system for actively adjusting a position of the turbomachine valve.

Turbomachines, such as, but not limiting of, gas turbines generally have control systems ("controllers") for monitoring and controlling purposes. These controllers govern a position, such as a valve opening that are used, for example, but not limiting of, in the combustion system of the gas turbine. To minimize the levels of the generated emissions, some combustion systems may include control-scheduling algorithms that receive data on the firing of the turbomachine, and an operation mode of the combustion system. These algorithms may then generate a required valve position.

Generally, the algorithm(s) incorporate a scheduled fuel split and a calibration curve to determine the amount of fuel that flows to a fuel nozzle in a combustor. The algorithm relates the desired fuel split to the fuel control valve stroke (which determines an opening area and, the fuel flow of the valve). For a variety of reasons (calibration, variations in the fuel valve, etc) the actual fuel split and the scheduled fuel split vary. Field data suggests that the difference between the desired fuel split and the actual fuel split may be of a concern.

Some combustion systems generally incorporate a plurality of manifolds, each of which supply a fuel, via a control valve, to a designated nozzle on combustion can. Manifold devices, such as, but not limiting of, pressure transducers, pressure transmitters, or the like; are used to monitor emission the pressure or flow within each manifold. The manifold devices may provide an accurate measurement of the amount of fuel flowing through the control valve. Some turbomachine controllers employ triplex redundancy for control and processing reasons. Triplex redundancy is often used to increase the reliability and to meet the requirements of turbomachine operators. Providing three manifold devices for each combustion manifold is expensive, and adds to the maintenance and calibration requirements of the turbomachine.

Therefore there is a desire for a cost effective approach to directly control a position of the control valve. The approach should not require triple redundancy of each manifold measurement device. There may also be a desire for a cost effective approach to accurately determine the fuel flow of the combustion system.

### BRIEF SUMMARY OF THE INVENTION

In accordance with an embodiment of the present invention, a method of adjusting a position of a device, the method comprising: determining an estimated value of a position of a device using an algorithm (90), wherein the algorithm receives an input from at least one sensor, wherein the at least one sensor measures a physical property of the device; determining a trim factor based on a comparison of a value of an actual position of the device and a requested position (105); utilizing the trim factor to adjust the value of the estimated position (120); and determining whether the value of the estimated position and the requested position are within an allowable range (95).

### BRIEF DESCRIPTION OF THE DRAWINGS

There follows a detailed description of embodiments of the invention by way of example only with reference to the accompanying drawings, in which:
Figure 1 is a schematic illustrating a turbomachine integrated with a control system, in accordance with an embodiment of the present invention.
Figure 2 is a block diagram illustrating a conventional algorithm of a fuel control system.
Figure 3 is a block diagram illustrating a model-based system for a fuel controller in accordance with an embodiment of the present invention.
Figure 4 is a block diagram of an exemplary system for operating a fuel system in accordance with an embodiment of the present invention.

### DETAILED DESCRIPTION OF THE INVENTION

Certain terminology is used herein for convenience only and is not to be taken as a limitation on the invention. For example, words such as "upper," "lower," "left," "front", "right," "horizontal," "vertical," "upstream," "downstream," "fore", and "aft" merely describe the configuration shown in the Figures. Indeed, the components may be oriented in any direction and the terminology, therefore, should be understood as encompassing such variations unless specified otherwise. As used herein, "parameters" and similar terms refer to items that can be used to define the operating conditions of a turbomachine, such as temperatures, pressures, and flows at defined locations in the turbomachine that can be used to represent an operating condition.

The following discussion focuses on an embodiment of the present invention integrated with a turbomachine, such as, but not limiting of, a gas turbine. Other embodiments of the present invention may be integrated with other systems that comprise at least one valve of which operators desire at adjust or tune, in or near real-time.

An embodiment of the present invention has the technical effect of utilizing a model-based system and real time data to adjust a parameter of at least one valve. An embodiment of the present invention may reduce the need of multiple sensors within a fuel system by integrating a model-based controller with real-time or approximately real-time data to adjust a parameter of at least one valve. An embodiment of the present invention may utilize a model-based controller to calculate the fuel flow through the at least one valve, in or near real-time.

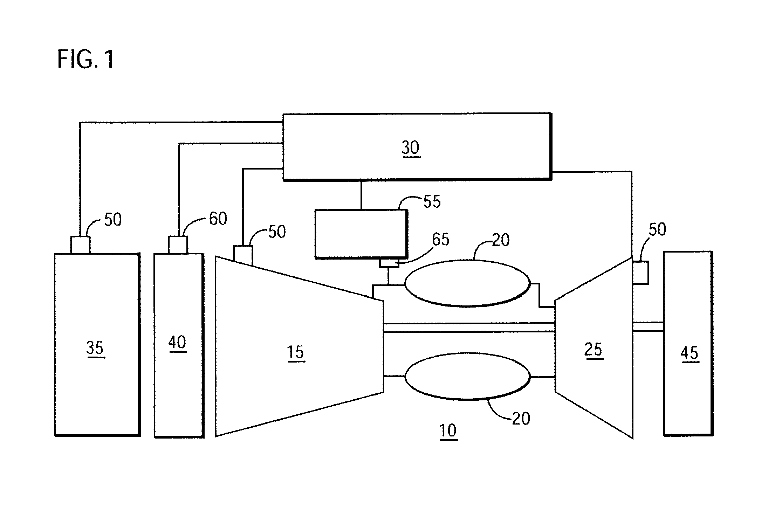

Referring now to the Figures, where the various numbers represent like elements throughout the several views. Figure 1 is a schematic illustrating a turbomachine 10 integrated with a control system 30, in accordance with an embodiment of the present invention. Figure 1 illustrates a turbomachine 10 comprising: a compressor section 15, a combustor 20, a turbine section 25 drivingly coupled to the compressor section 15 and a control system 30. A compressor inlet 35 feeds an airstream to inlet guide vanes (IGVs) 40 and to the compressor section 15. An IGV actuator 60 may receive commands from the control system 30 to move the IGVs 40 to adjust the amount of air entering the compressor section 15. The turbine section 25 may drive a load 45, such as, but not limiting of, a generator to produce electrical power.

Several sensors 50 for detecting various conditions of the turbomachine 10, load 45, and environment may monitor the operation of the turbomachine 10. For example, but not limiting of, temperature sensors may monitor compressor discharge temperature, exhaust temperature, and other temperature measurements of the gas stream through the turbomachine 10. Pressure sensors may monitor static and dynamic pressure levels at: the inlet and outlet of the compressor section 15, and the exhaust, as well as at other locations in the gas stream. The sensors 50 may also comprise flow sensors, speed sensors, flame detector sensors, valve position sensors, guide vane angle sensors, or the like that sense various parameters pertinent to the operation of turbomachine 10.

The control system 30 may be a computer system comprising at least one processor that executes programs to control the operation of the turbomachine 10 using sensor inputs and instructions from human operators. The programs executed by the control system 30 may include scheduling algorithms for regulating fuel flow to the combustor 20. The commands generated by the control system 30 may cause a fuel controller 55 on the turbomachine 10 to adjust at least one fuel valve 65, which regulates the flow and type of fuel.

The control system 30 may regulate the turbomachine 10 based, in part, on algorithms stored in computer memory of the control system 30. These algorithms may enable the control system 30 to maintain the NOx and CO emissions in the exhaust to certain predefined limits, and to maintain the combustor firing temperature to within predefined temperature limits. The combustor 20 may be incorporated within a Dry-Low Nox (DLN) combustion system. The control system 30 may be programmed and modified to control the DLN combustion system.

Turbomachine 10 with DLN combustion systems, require precise control so that the emissions are within allowable or preferred limits; and to ensure that the turbomachine 10 operates within certain operability boundaries, such as, but not limiting of, lean blowout and combustion dynamics. These systems may require highly accurate and calibrated fuel valves 65, such as, but not limiting of, gas control valves.

An algorithm that comprises a scheduled fuel split and a calibration curve that relates the desired fuel split to the fuel control valve actuator stroke may determine the amount of fuel that flows to each set of fuel nozzles in each combustor 20. For a variety of reasons, such as, but not limiting of, valve calibration, variations in valve sizes, etc., the actual fuel split and the scheduled fuel split may vary. Commonly, calibration of these fuel valves 65 require a field service engineer to adjust settings in the control system 30 to accommodate changes in the operation of the fuel valve 65 due to wear and other conditions. Typically, the fuel valve 65 cannot be recalibrated while the turbomachine 10 operates.

Conventional closed-loop systems employ sensors to measure the position of the each fuel valve 65 and provide feedback data used by control algorithms. The expense, delay, reliability, maintenance, and calibration issues associated with the sensing equipment associated with the fuel valve 65 pose unique problems for a closed-loop approach. For example, but not limiting of, an inaccurate reading on a position of the fuel valve 65 may lead to the turbomachine 10 generating emissions that are out of compliance.

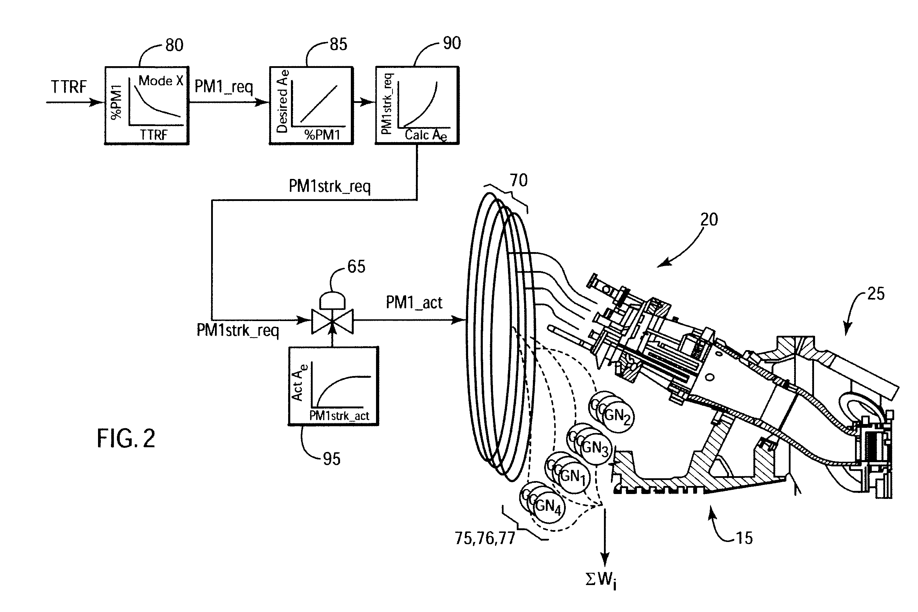

Figure 2 is a block diagram illustrating a conventional algorithm of a fuel controller 55. Figure 2 may be considered a high-level system diagram that illustrates how a conventional algorithm of the fuel controller 55 may be integrated with the combustor 20. An embodiment of a combustion system of the turbomachine 10 may incorporate a plurality of manifolds 70. The manifold 70 receives a fuel from the fuel valve 65 and then distributes the fuel to a nozzle on each combustor 20 of the turbomachine 10. As illustrated in Figure 2, some combustion systems comprise multiple manifolds 70. Here, each manifold 70 may correspond to a specific fuel valve 65. The program comprising the series of algorithms blocks 80,85, 90, and 95 may control the operation of a specific fuel valve 65 that corresponds to a specific manifold 70. For example, but not limiting of, in some DLN combustion system comprises four illustrated manifolds 70, as illustrated in Figure 2. Here each manifold is integrated with a separate fuel valve 65; only one of which is illustrated in Figure 2.

Some control systems 30 require data on the pressure within the manifold 70. A manifold device 75, also illustrated of GNx, is commonly used to provide this data, which may important for fuel scheduling, combustion splits, etc. The manifold device 75 may take the form of a pressure transmitter, a pressure transducer, or any other device that may measure the pressure within the manifold 70. The pressure data may be of an importance that requires triple redundant manifold devices 75 for each manifold 70, as illustrated.

The following is an example of how an embodiment of the conventional algorithm may control the operation of the fuel valve 65. Sensors and surrogates are provided to blocks 80, 85, 90, and 95 to define a valve position request. Generally, sensor signals may provide data regarding parameters of the turbomachine 10 that are directly monitored by the sensors 50. For example, but not limiting of, temperature and pressure sensors may directly measure the temperatures and pressures at the inlet to the turbomachine 10, at various stages of the compressor section 15 and at the exhaust. Similarly, speed sensors may measure the rotational speed of the turbomachine 10 and flow sensors may measure the fuel flow into the combustor 20. Surrogates are parameters of the turbomachine 10 that are not directly sensed, but are rather parameters determined based on algorithms and correlations based on sensor data regarding other operating conditions.

Block 80 represents a valve position algorithm that may determine a requested valve position (PM1_req). Block 80 receives data on a firing temperature (TTRF) and a combustion Mode (Mode X). Block 80 may then utilize a graph of other data set to determine a desired position of the fuel valve 65, based on TTRF and Mode X. Next, block 85, which represents a desired valve area algorithm, may determine the required opening of the fuel valve 65 necessary to achieve the desired valve position. Block 85 may receive the PM1_req and data on the dimensions of the fuel valve 65 (Calc Ae). Block 85 may then utilize a graph of other data set to determine the required stroke (PM1strk_req) to achieve the desired position of the fuel valve 65. Next, the PM1strk_req data may be sent to a controller of the fuel valve 65. Block 95 may provide feedback on the actual position of the fuel valve 65. Here, position devices connected to the fuel valve 65, such as, but not limiting of, linear variable differential transducers (LVDTs) may provide the position feedback data (PM1strk_act). Block 95 and the controller of the fuel valve 65 may compare the PM1strk_req and the PM1strk_act data and then generate an error signal to adjust the position of the fuel valve 65, if required.

If a turbomachine 10 could be relieved of the requirement for triple redundancy in sensor signals from the manifold devices 75, and only a single manifold device 75 employed, then significant product cost could be avoided and the maintenance requirements reduced. However, employing a single manifold device 75 in the aforementioned conventional algorithm, or the like, may place a significant reliability burden on that manifold device 75.

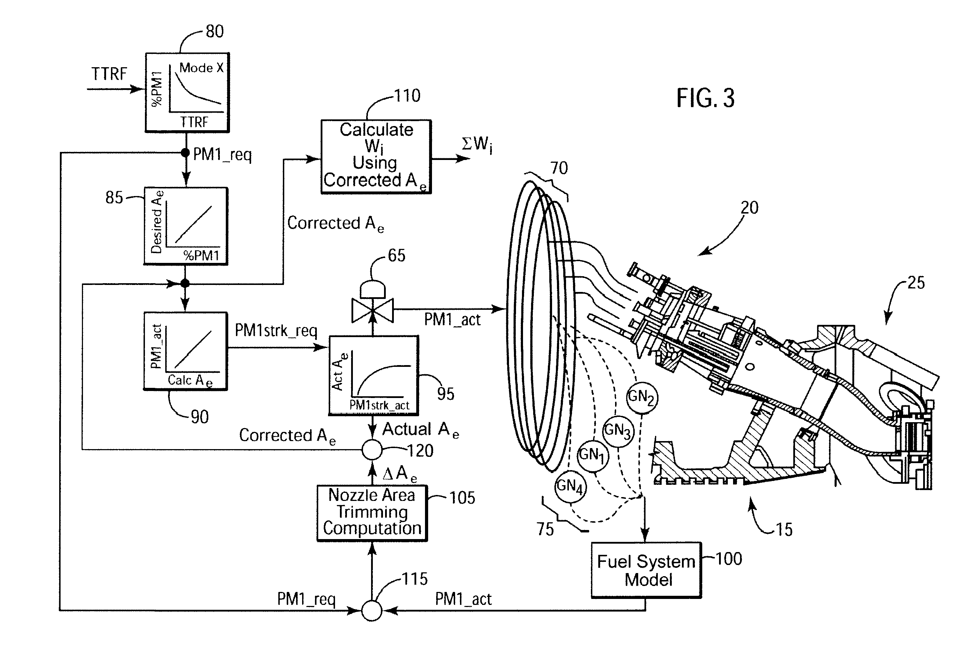

Figure 3 is a block diagram illustrating a model-based algorithm for a fuel controller 55 in accordance with an embodiment of the present invention. Figure 3 may be considered a high-level system diagram that illustrates how a model-based algorithm of the fuel controller 55 may be integrated with the combustor 20. As discussed, an embodiment of a combustion system of the turbomachine 10 may incorporate a plurality of manifolds 70. The manifold 70 receives a fuel from the fuel valve 65 and then distributes the fuel to a nozzle on each combustor 20 of the turbomachine 10. Each manifold 70 may correspond to a specific fuel valve 65. For example, but not limiting of, in some combustion systems each of the four illustrated manifolds 70 are integrated with a specific fuel valve 65; only one of which is illustrated in Figure 3.

As illustrated, Figure 3 adds a fuel system model 100, a trimming algorithm 105, and a fuel flow algorithm 110 to the conventional algorithm discussed in Figure 2. Figure 3 also illustrates that an embodiment of the fuel controller 55 of the present invention may only require a single manifold device 75 for each manifold 70 of the DLN combustion system.

An embodiment of the fuel system model 100 may determine an estimate, in real time, of the actual position of the fuel valve 65. The fuel system model 100 may be considered an adaptive real-time engine that comprises a simulation of the operation of the turbomachine 10. The fuel system model 100 may allow for tuning each fuel valve 65, in real time, to match the desired fuel schedule. This may allow for closed loop control of fuel splits and scheduling by making adaptive corrections to the calibration curves of the fuel valve 65.

One of the benefits of the fuel system model 100 is that the aforementioned LVDTs or other physical devices that measure the position of the fuel valve 65 are not required. Instead, the fuel system model 100 utilizes the data on: a) the pressure within the manifold 70; b) data on chamber pressure, fuel properties, ambient conditions, firing temperature, and other data, to the estimate the position of the fuel valve 65. The fuel system model 100 may significantly reduce the effect of an inaccurate calibration of the device that determines the position of the fuel valve 65.

The trimming algorithm 105 may be used to adjust, or tune, the fuel splits based on the fuel system model 100 data. An embodiment of the trimming algorithm may determine a difference in nozzle areas between the desired valve position and actual valve position. The trimming algorithm 105 may function as a mathematical engine, such as, but not limiting of, a proportion plus integral (P+I) compensation algorithm that outputs a trim valve for a change in nozzle area (Δ Ae). The P+I unit may receive an error signal, which may be the difference between the PM1_req and the PM1_act, as previously described. As illustrated in Figure 3, the fuel system model 100 may generate PM1_act and the valve position algorithm block 80 may generate PM1_req.

The fuel flow algorithm 110 generally functions to calculate a fuel flow (ΣWi) based on the manifold pressure. This may prove beneficial by providing a fuel flow value that is not dependent of the calibration of the fuel vale 65. The fuel flow algorithm 110 may receive data on a corrected Ae, which incorporates data from the fuel system model 100 and the trimming algorithm 105. Furthermore, the value of ΣWi may be independent of the fuel heating that may occur using other methods of determining ΣWi. For example, but not limiting of, some methods measure ΣWi via an orifice installed on an end cover of the combustor 20. Here, the fuel flowing through the orifice experiences a temperature rise due to the conductive heat transfer from components of the combustor 20 to the fuel. This heat transfer may lead to an inaccurate value of fuel flow. The method employed by the fuel flow algorithm 110 does not utilize an orifice. The fuel measured may experience a significantly less temperature rise. Therefore, the fuel flow algorithm may offer a more accurate measurement of the ΣWi.

The following is a non-limiting example, but not limiting of, of how an embodiment of the present invention may control the operation of the fuel valve 65. Sensors and surrogates are provided to a series of algorithms 80, 85, 90, 95, 100, 105, and 110 to define a valve position request. The function and operations of blocks 80, 85, and 90 may be similar to that described in Figure 2.

Block 80 represents an algorithm that may determine a desired valve position (PM1_req). Block 80 receives data on a firing temperature (TTRF) and a combustion Mode (Mode X). Block 80 may then utilize a graph of other data set to determine a desired position of the fuel valve 65, based on TTRF and Mode X. Next, block 85, which represents a desired valve area algorithm, may determine the required opening of the fuel valve 65 necessary to achieve the desired valve position (PM1_req). The determined value for PM1_req may then be sent to block 85 and to a first summing junction 115.

Block 85 may receive the PM1_req data and comprise a memory which may have the dimensions of the fuel valve 65 stored therein. Block 85 may then utilize a graph, or other data set, to determine the required valve area (Calc Ae) needed to achieve PM1_req.

The data on the Calc Ae may then be received by block 90, the aforementioned valve stroke request algorithm. Block 90 may utilize at least one curve, or other data to determine the required stroke (PM1strk_req) needed to achieve PM1_req. Here, the at least one curve, or other data, may comprise stored valve calibration data.

Next, in an embodiment of the present invention, block 95 may receive the PM1strk_req data. Here, block 95 may serve a few purposes. Block 95 may communicate the PM1strk_req to the fuel valve 65. Block 95 may also utilize at least one curve, or other data to determine the actual area of the fuel valve 65. This data may be used in the closed loop feature of an embodiment of the present invention, and may provide feedback on the actual position of the fuel valve 65.

PM1strk_req data may be considered the command that determines the fuel split, which may lead to the movement of an actuator of the fuel valve 65. The fuel split may be considered After PM1strk_req leads to the adjustment of the position of the fuel valve 65; the manifold device 75 may measure a difference in the amount of pressure within the manifold 70. As discussed, an embodiment of the present invention may function with a single manifold device 75, an important and cost saving feature. The manifold pressure data may then be sent to the fuel system model 100, which may determine and/or confirm the actual position of the fuel valve 65 (PM1_act).

Next, a first summing junction 115 may compare data on the desired fuel split versus the actual fuel split. This may take be tied to the comparison of the form of valve position (PM1_act) and the request valve position (PM1_req). An error signal, representing the difference between PM1_act and PM1_req may be sent to the trimming algorithm 105. This process may be repeated until the desired fuel split is approximately equal to the actual fuel split.

Next, the second summing junction 120 may subtract or trim the Δ Ae from the Actual Ae, creating a corrected Ae. The corrected Ae, may be considered the required amount of change in nozzle area the fuel valve 65 may need to achieve the PM1_req value.

Next, the corrected Ae value may then be communicated to block 90. Here, the calibration curve, or other data set, may be adjusted to created a new PM1strk_req leading to an adjustment to the stroke of the fuel valve 65, as described. The corrected Ae value may also be communicated to the fuel flow algorithm 110, which may determine an updated valve of the total fuel flow ΣWi, as described.

As described, an embodiment of the present invention may provide a user with multiple benefits. An embodiment of the present invention may automatically compensate for variations in the control valve hardware and calibration process. An embodiment of the present invention may eliminate the redundancy of the manifold devices 75. An embodiment of the present invention may provide a method for determining the total fuel flow that is independent of the fuel heating.

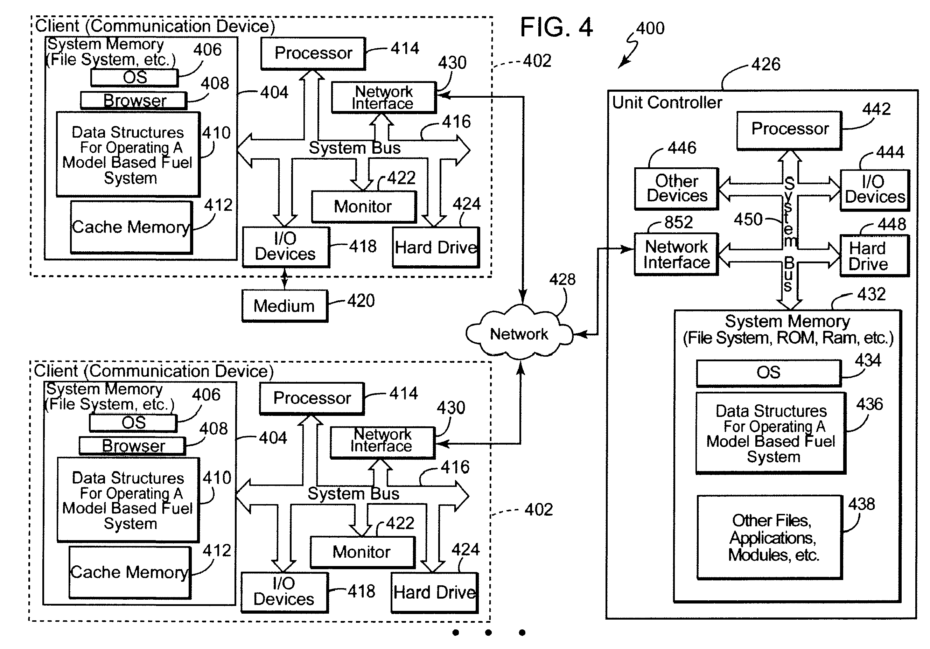

Figure 4 is a block diagram of an exemplary system 400 for operating a fuel system in accordance with an embodiment of the present invention. The elements of the Figure 3 may be embodied in and performed by the system 400. The system 400 may include one or more user or client communication devices 402 or similar systems or devices (two are illustrated in Figure 4). Each communication device 402 may be for example, but not limited to a computer system, a personal digital assistant, a cellular phone, or similar device capable of sending and receiving an electronic message.

The communication device 402 may include a system memory 404 or local file system. The system memory 404 may include for example, but not limited to, a read only memory (ROM) and a random access memory (RAM). The ROM may include a basic input/output system (BIOS). The BIOS may contain basic routines that help to transfer information between elements or components of the communication device 402. The system memory 404 may contain an operating system 406 to control overall operation of the communication device 402. The system memory 404 may also include a browser 408 or web browser. The system memory 404 may also include data structures 410 or computer-executable code for operating a model based fuel system that may be similar or include elements of the in Figure 3.

The system memory 404 may further include a template cache memory 412, which may be used in conjunction with Figure 3, for operating a model based fuel system.

The communication device 402 may also include a processor or processing unit 414 to control operations of the other components of the communication device 402. The operating system 406, browser 408, data structures 410 may be operable on the processor 814. The processor 414 may be coupled to the memory system 404 and other components of the communication device 402 by a system bus 416.

The communication device 402 may also include multiple input devices, output devices or combination input/output devices 418. Each input/output device 418 may be coupled to the system bus 416 by an input/output interface (not shown in Figure 4). The input and output devices or combination I/O devices 418 permit a user to operate and interface with the communication device 402 and to control operation of the browser 408 and data structures 410 to access, operate and control the software for operating a model based fuel system. The I/O devices 418 may include a keyboard and computer pointing device or the like to perform the operations discussed herein.

The I/O devices 418 may also include disk drives, optical, mechanical, magnetic, or infrared input/output devices, modems or the like. The I/O devices 418 may be used to access a medium 420. The medium 420 may contain, store, communicate, or transport computer-readable or computer-executable instructions or other information for use by or in connection with a system, such as the communication devices 402.

The communication device 402 may also include or be connected to other devices, such as a display or monitor 422. The monitor 422 may be used to permit the user to interface with the communication device 402.

The communication device 402 may also include a hard disk drive 424. The hard drive 424 may be coupled to the system bus 416 by a hard drive interface (not shown in Figure 4). The hard drive 424 may also form part of the local file system or system memory 404. Programs, software, and data may be transferred and exchanged between the system memory 404 and the hard drive 424 for operation of the communication device 402.

The communication devices 402 may communicate with a remote server 426 and may access other servers or other communication devices similar to communication device 402 via a network 428. The system bus 416 may be coupled to the network 428 by a network interface 430. The network interface 430 may be a modem, Ethernet card, router, gateway, or the like for coupling to the network 428. The coupling may be a wired connection or wireless. The network 428 may be the Internet, private network, an intranet, or the like.

The server 426 may also include a system memory 432 that may include a file system, ROM, RAM, and the like. The system memory 432 may include an operating system 434 similar to operating system 406 in communication devices 402. The system memory 432 may also include data structures 436 for operating model based fuel system. The data structures 436 may include operations similar to those described with respect to the Figure 3 in accordance with an embodiment of the present invention. The server system memory 432 may also include other files 438, applications, modules, and the like.

The server 426 may also include a processor 442 or a processing unit to control operation of other devices in the server 426. The server 426 may also include I/O device 444. The I/O devices 444 may be similar to I/O devices 418 of communication devices 402. The server 426 may further include other devices 446, such as a monitor or the like to provide an interface along with the I/O devices 444 to the server 426. The server 426 may also include a hard disk drive 448. A system bus 450 may connect the different components of the server 426. A network interface 452 may couple the server 426 to the network 428 via the system bus 450.

The flowcharts and step diagrams in the Figures illustrate the architecture, functionality, and operation of possible implementations of systems, methods and computer program products according to various embodiments of the present invention. In this regard, each step in the flowchart or step diagrams may represent a module, segment, or portion of code, which comprises one or more executable instructions for implementing the specified logical function(s). It should also be noted that, in some alternative implementations, the functions noted in the step may occur out of the order noted in the figures. For example, two steps shown in succession may, in fact, be executed substantially concurrently, or the steps may sometimes be executed in the reverse order, depending upon the functionality involved. It will also be noted that each step of the block diagrams and/or flowchart illustration, and combinations of steps in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although the present invention has been shown and described in considerable detail with respect to only a few exemplary embodiments thereof, it should be understood by those skilled in the art that we do not intend to limit the invention to the embodiments since various modifications, omissions and additions may be made to the disclosed embodiments without materially departing from the novel teachings and advantages of the invention, particularly in light of the foregoing teachings. Accordingly, we intend to cover all such modifications, omission, additions and equivalents as may be included within the spirit and scope of the invention as defined by the following claims.

For completeness, various aspects of the invention are now set out in the following numbered clauses:
1. A method of adjusting a position of a device, the method comprising:
   a. determining an estimated value of a position of a device using an algorithm, wherein the algorithm receives an input from at least one sensor, wherein the at least one sensor measures a physical property of the device;
   b. determining a trim factor based on a comparison of a value of an actual position of the device and a requested position;
   c. utilizing the trim factor to adjust the value of the estimated position; and
   d. determining whether the value of the estimated position and the requested position are within an allowable range.
2. The method of clause 1, wherein the device comprises at least one control valve.
3. The method of clause 2, wherein the at least one sensor comprises a manifold device which measures a physical property of a manifold, wherein the manifold provides a fuel to the at least one control valve.
4. The method of clause 3, wherein the algorithm comprises a fuel system model utilizing the input from the at least one sensor to determine a current position of the at least one control valve.
5. The method of clause 1, wherein the algorithm utilizes data on a combustion firing temperature and a combustion operating mode to determine the requested position.
6. The method of clause 4, wherein, the step of determining a trim factor based on a comparison of the value of the estimated position and a requested position comprises a trim algorithm, wherein the trim algorithm determines a difference between the value of the estimated position and the requested position.
7. The method of clause 6, wherein the trim algorithm determines a nozzle area difference.
8. The method of clause 7, wherein the algorithm incorporates data from the trim algorithm to determine a fuel flow.
9. The method of clause 7, further comprising utilizing data on the nozzle area difference to generate a command to adjust a position of the at least one control valve.
10. The method of clause 8, further comprising the step of applying the command to a system that operates the at least one control valve.
11. The method of clause 4, wherein the physical property comprises a pressure within the manifold.
12. A system for adjusting a position of a device, the system comprising: a turbomachine, wherein the turbomachine comprises: a compressor section; at least one combustor; a turbine section; and a fuel controller, wherein the fuel controller comprises a processor for executing the steps of:
   determining an estimated value of a position of a device using an algorithm, wherein
   the algorithm receives an input from at least one sensor, wherein the at least one sensor measures a physical property of the device;
   determining a trim factor based on a comparison of a value of an actual position of the device and a requested position;
   utilizing the trim factor to adjust the value of the estimated position; and
   determining whether the value of the estimated position and the requested position are within an allowable range.
13. The system of clause 12, wherein the device comprises at least one control valve.
14. The system of clause 13, wherein the at least one sensor comprises a manifold device which measures a physical property of a manifold, wherein the manifold provides a fuel to the at least one control valve.
15. The system of clause 14, wherein the algorithm comprises a fuel system model that utilizes data from the at least one sensor to determine a position of the at least one control valve.
16. The system of clause 15, wherein the algorithm incorporates data on a combustion firing temperature and a combustion operating mode to determine the requested position.
17. The system of clause 15, wherein the processor utilizes the trim algorithm to determine a difference between the value of the estimated position and the requested position.
18. The system of clause 17, wherein the trim algorithm determines a nozzle area difference, and wherein the algorithm utilizes the nozzle area difference data to determine a fuel flow.
19. The system of clause 18, wherein the processor utilizes data on the nozzle area difference to generate a command to adjust the position of the at least one control valve.
20. The system of clause 19, wherein the processor communicates the command to a system that operates at least one control valve.

## Claims

1. A method (300) of adjusting a position of a device, the method (300) comprising:
a. determining an estimated value of a position of a device using an algorithm (90), wherein the algorithm receives an input from at least one sensor, wherein the at least one sensor measures a physical property of the device;
b. determining a trim factor based on a comparison of a value of an actual position of the device and a requested position (105);
c. utilizing the trim factor to adjust the value of the estimated position (120); and
d. determining whether the value of the estimated position and the requested position are within an allowable range (95).

2. The method (300) of claim 1, wherein the device comprises at least one control valve (65).

3. The method (300) of claim 2, wherein the at least one sensor comprises a manifold device (75) which measures a physical property of a manifold (70), wherein the manifold (70) provides a fuel to the at least one control valve (65).

4. The method (300) of claim 3, wherein the algorithm comprises a fuel system model (100) utilizing the input from the at least one sensor to determine a current position of the at least one control valve (65).

5. The method (300) of any of the preceding claims, wherein the algorithm utilizes data on a combustion firing temperature and a combustion operating mode to determine the requested position (80).

6. The method (300) of claim 4, wherein, the step of determining a trim factor based on a comparison of the value of the estimated position and a requested position (105) comprises a trim algorithm, wherein the trim algorithm determines a difference between the value (65) of the estimated position and the requested position (120).

7. The method (300) of claim 6, wherein the trim algorithm determines a nozzle area difference (105).

8. The method (300) of claim 7, wherein the algorithm incorporates data from the trim algorithm (105) to determine a fuel flow.

9. The method (300) of claim 7, further comprising utilizing data on the nozzle area difference to generate a command to adjust a position of the at least one control valve (65, 90,95).

10. The method (300) of claim 8 further comprising the step of applying the command (65) to a system that operates the at least one control valve (65).

11. The method of claim 4, wherein the physical property comprises a pressure within the manifold.

12. A system for adjusting a position of a device, the system comprising: a turbomachine, wherein the turbomachine comprises: a compressor section; at least one combustor; a turbine section; and a fuel controller, wherein the fuel controller comprises a processor for executing the steps of:
determining an estimated value of a position of a device using an algorithm, wherein the algorithm receives an input from at least one sensor, wherein the at least one sensor measures a physical property of the device;
determining a trim factor based on a comparison of a value of an actual position of the device and a requested position;
utilizing the trim factor to adjust the value of the estimated position; and
determining whether the value of the estimated position and the requested position are within an allowable range.

13. The system of claim 12, wherein the device comprises at least one control valve.

14. The system of claim 13, wherein the at least one sensor comprises a manifold device which measures a physical property of a manifold, wherein the manifold provides a fuel to the at least one control valve.

15. The system of claim 14, wherein the algorithm comprises a fuel system model that utilizes data from the at least one sensor to determine a position of the at least one control valve.
